# EUROPÄISCHE PATENTSCHRIFT

(11) **EP 0 571 654 B1**
(45) Veröffentlichungstag und Bekanntmachung des Hinweises auf die Patenterteilung: **15.11.1995**
(21) Anmeldenummer: 92111553.1
(22) Anmeldetag: 08.07.1992
(51) Int. Cl.: G05G 25/04, B60H 1/00

(54) **Einteilige elastische Blende zur Abdichtung eines Schlitzes in einem Schiebesteller**
Unitary elastic screen to seal the slot of a sliding actuator
Recouvrement élastique d'une seule pièce pour l'obturation d'une fente dans une commande coulissante

(30) Priorität: 21.05.1992 ES 9201599 U
(43) Veröffentlichungstag der Anmeldung: 01.12.1993
(73) Patentinhaber: Behr GmbH & Co., D-70469 Stuttgart (DE)
(72) Erfinder: Creixell, Jordi, ES-08011 Barcelona (ES); Forcano, Xavier, ES-08960 San Just Desvern (ES); Grao, Manuel, ES-08015 Barcelona (ES); Pérez, Juan José, ES-08820 Prat de Llobregat (ES)
(74) Vertreter: Riedel, Peter, Dipl.-Ing.

(56) Entgegenhaltungen:
- CH-A- 244 930
- DE-A- 3 117 629
- DE-B- 2 804 604
- DE-C- 4 030 909

## Beschreibung

Die Erfindung bezieht sich auf eine einteilige elastische Blende zur Abdichtung eines Schlitzes in einem Schiebesteller der im Obergbegriff des Anspruchs 1 angegebenen Gattung.

Aus der DE-C-40 30 909 ist ein Schiebesteller einer Bedienungsanordnung bekannt, die eine einteilige elastische Blende zur Abdichtung des Schlitzes in dem Schiebesteller gemäß dem Oberbegriff des Anspruchs 1 aufweist. In der Frontblende eines Gehäuses befindet sich ein Stellschlitz durch den der Schiebesteller ragt. Damit nicht Staub oder Nässe in das Innere des Gehäuses dringen kann und außerdem bei beleuchteten Schiebestellern kein Licht durch den Schlitz austritt, ist eine gummielastische Dichtlippe vorgesehen, die sich entlang des Stellschlitzes erstreckt und diesen abdeckt. Die Dichtlippe besteht aus einer Vielzahl parallel zueinander angeordneter Lamellen, die durch quer dazu angeordnete Wände miteinander verbunden sind. Die Verbindungswände sind dünner ausgebildet als die Lamellen.

Es ist die Aufgabe der vorliegenden Erfindung, eine einteilige elastische Blende zur Abdichtung eines Schlitzes in einem Schiebesteller der im Oberbegriff des Anspruchs 1 angegebenen Gattung derart weiterzubilden, daß sie einfacher und kostengünstiger herstellbar ist.

Diese Aufgabe wird bei einer einteiligen elastischen Blende der bezeichneten Art durch die kennzeichnenden Merkmale des Anspruchs 1 gelöst.

Durch diese Form der Blende wird die Gestaltung des Werkzeugs zu deren Herstellung wesentlich vereinfacht. Außerdem wird durch die gleichmäßige Materialstärke der Dichtlippe die Lebensdauer der elastischen Blende wesentlich erhöht.

Gemäß einer ersten Ausführungsvariante der Erfindung ist die Zick-Zack-Form des Bandes durch im Winkel zueinander angeordnete, gerade Abschnitte und dazwischen befindliche Bogenabschnitte gebildet. Alternativ dazu kann die gewellte Form des Bandes durch abwechselnd ausgerichtete und mit ihren Enden aneinandergereihte Bögen gebildet sein. Bei beiden Ausführungsformen ist eine gute Schmiegsamkeit und sichere Anlage an dem Schiebesteller und eine ebenso gute Rückstellwirkung, auch im Bereich direkt neben dem Schiebesteller, gegeben. Die geometrische Form des Bandes ist neben der Materialauswahl mit-bestimmend für die gewünschte Elastizität. Daher kann auch durch die Anzahl der Bogenabschnitte oder Bögen sowie die durch zwei aufeinanderfolgende Bogenabschnitte oder Bögen bestimmte Höhe des Bandes die Charakteristik bezüglich Geschmeidigkeit und Rückstellwirkung mit-beeinflusst werden.

Die Leiste der elastischen Blende hat vorzugsweise einen rechteckigen Querschnitt. Das Band kann in Richtung seiner Breite orthogonal zu einer oberen Querschnittskante der Leiste oder in einem stumpfen Winkel zu einer vorderen Querschnittskante der Leiste angeordnet sein. Durch die Zick-Zack- bzw. Wellenform des Bandes ergeben sich Vertiefungen, die an dem der Leiste entfernt liegenden Ende offen sind. Gemäß einer vorteilhaften Weiterbildung der Erfindung wird daher vorgeschlagen, daß der Seitenrand des Bandes, welcher der Leiste gegenüber liegt, in abgewinkelte Abschnitte übergeht, die zumindest die Hälfte der durch die Zick-Zack- oder Wellenform gebildeten Vertiefungen seitlich schließen. Durch diese Maßnahme kann die Abdichtung des Schlitzes noch weiter verbessert werden. Diese abgewinkelten Abschnitte haben vorzugsweise die gleiche Materialstärke wie das die Dichtlippe bildende Band; es sind jedoch auch Ausführungen denkbar, bei denen die abgewinkelten Abschnitte etwas dicker oder etwas dünner ausgeführt sind. Ebenso ist es zweckmäßig, daß die abgewinkelten Abschnitte eine durchgehende und sich parallel zur Leiste erstreckende, ebene Fläche bilden.

Die Dicke des Bandes kann je nach den zu erfüllenden Bedingungen festgelegt werden und beträgt vorzugsweise zwischen 0,1 mm bis 0,2 mm. Das Verhältnis der Breite des Bandes zu dessen Dicke sollte zwischen 50 : 1 und 25 : 1 betragen; als besonders bevorzugt wird ein Verhältnis von 33 : 1 angesehen. Die Leiste der Blende kann mit Öffnungen zur Aufnahme von Befestigungsmitteln vorgesehen sein, durch die sowohl die exakte Positionierung der elastischen Blende im Gehäuse des Schiebestellers, als auch eine sichere Halterung ermöglicht wird.

Ausführungsbeispiele der erfindungsgemäßen Blende sind nachstehend anhand der Zeichnung näher erläutert.

In der Zeichnung zeigt:
- **Fig. 1**: die Vorderansicht einer ersten Ausführungsform der Blende;
- **Fig. 2**: einen Schnitt entlang der Linie II-II in Fig. 1;
- **Fig. 3**: eine vergrößerte Darstellung des Schnittes III-III in Fig. 1;
- **Fig. 4**: einen Schnitt entlang der Linie IV-IV in Fig. 3;
- **Fig. 5**: einen Ausschnitt der Vorderansicht einer zweiten Ausführungsform der Blende;
- **Fig. 6**: die Ansicht in Richtung des Pfeiles VI in Fig. 5;
- **Fig. 7**: eine vergrößerte Darstellung des Schnittes entlang der Linie VII-VII in Fig. 5;
- **Fig. 8**: eine vergrößerte Darstellung des Schnittes entlang der Linie VIII-VIII in Fig. 5

und
- **Fig. 9**: eine weitere Ausführungsvariante des die Dichtlippe bildenden Bandes.

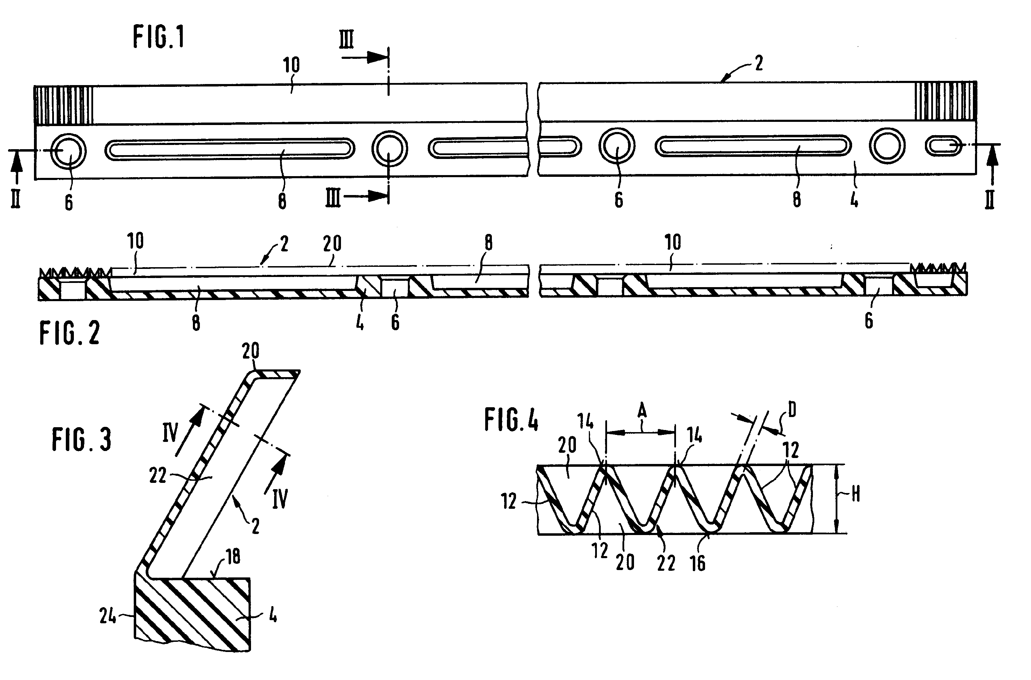

In **Fig. 1** ist eine elastische Blende 2 dargestellt, die im wesentlichen aus einer Leiste 4 und einer daran angeformten Dichtlippe 10 besteht. Auf die Ausgestaltung der Dichtlippe 10 wird später noch näher eingegangen. In der Leiste 4 befinden sich Befestigungsöffnungen 6 und Vertiefungen 8, wobei die Vertiefungen 8 beispielsweise zum Eingriff von Positionierungsmitteln im Gehäuse eines - in der Zeichnung nicht dargestellten - Schiebestellers und die Befestigungsöffnungen 6 zum Durchtritt von Befestigungsmitteln dienen.

Die **Fig. 2** zeigt einen Schnitt entlang der Linie II-II in Fig. 1. In dieser Darstellung ist hinter der Leiste 4 ein schmaler Streifen der Dichtlippe 10 sichtbar, die dort als gezackter Streifen erscheint. Die elastische Blende 2 ist einstückig ausgeführt und besteht aus einem Silikon mit einem Härtegrad von 50 shore.

In **Fig. 3** ist in vergrößerter Darstellung der Schnitt entlang der Linie III-III in Fig. 1 gezeigt. Die Leiste 4 besitzt eine obere Querschnittskante 18, über welche sich das als Dichtlippe 10 wirkende zick-zack-förmige Band 22 erstreckt. Bezogen auf die vordere Querschnittskante 24 der Leiste 4 ist das Band 22 in einem stumpfen Winkel angeordnet, wobei das obere Ende über die eigentliche Querschnittsform der Leiste 4 hinausragt. Am oberen Ende des zick-zack-förmigen Bandes 22 ist ein abgewinkelter Abschnitt 20 sichtbar, der ebenfalls einstückig mit Leiste 4 und Band 22 ausgeführt ist und parallel zur oberen Querschnittskante 18 der Leiste 4 verläuft.

Die **Fig. 4** zeigt einen Schnitt entlang der Linie IV-IV in Fig. 3. Aus dieser Darstellung ist ersichtlich, daß das zick-zack-förmige Band 22 aus einer Vielzahl von jeweils V-förmig aufeinanderfolgend angeordneten, geraden Abschnitten 12 besteht, die mittels Bogenabschnitten 14 und 16 ineinander übergehen. Besonders bedeutsam an dieser Anordnung ist, daß die Materialstärke **D** über die gesamte Länge des Bandes 22 gleichbleibend ist und beispielsweise in der Größenordnung zwischen 0,1 mm und 0,2 mm liegt. Die jeweils auf einer Seite des Bandes 22 liegenden Bogenabschnitte sind mit 14 bezeichnet, und die auf der anderen Seite des Bandes befindlichen Bogenabschnitte haben das Bezugszeichen 16. Der Abstand zweier Bogenabschnitte 14 auf derselben Seite des Bandes 22 ist mit **A** bezeichnet, wohingegen zwei benachbarte Bogenabschnitte 14 und 16, die in entgegengesetzte Richtungen zeigen, die Höhe **H** des Bandes 22 bestimmen. Nicht geschnitten, aber im Hintergrund sichtbar, sind in Fig. 4 die abgewinkelten Abschnitte 20. Der Winkel, in dem die geraden Abschnitte 12 zueinander angeordnet sind, beträgt in diesem Ausführungsbeispiel 45°.

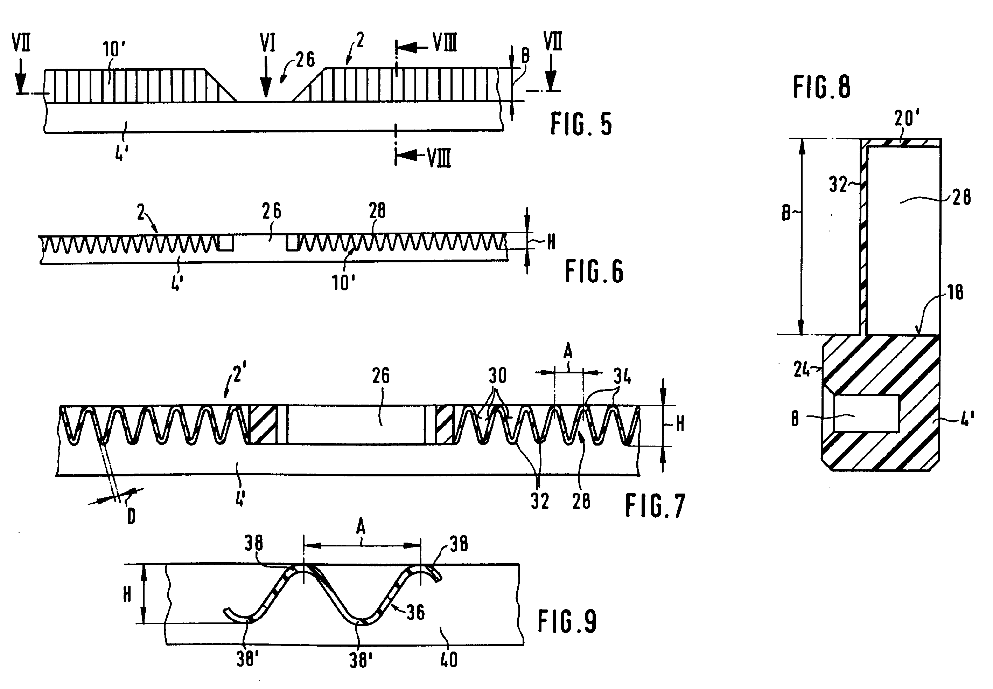

Die **Fig. 5** zeigt einen Ausschnitt der Vorderansicht einer zweiten Ausführungsform der Blende 2′, die aus einer einstückigen Leiste 4′ mit angeformter Dichtlippe 10′ besteht. Die Dichtlippe 10′ besitzt eine Aussparung 26, welche die Form eines Kegelstumpfes aufweist. Mit **B** ist die Breite des Bandes, das die Dichtlippe 10′ bildet, angegeben. Die Aussparung 26 befindet sich im eingebauten Zustand der elastischen Blende 2′ in einem durch die Frontplatte des Gehäuses verdeckten Bereich, also seitlich des Schlitzes für den Schiebesteller. Diese Aussparung dient zur Aufnahme eines Prismas zur Lichtleitung zu beleuchteten Symbolen. Die elastische Blende 2′ ist bei Bediengeräten mit mehreren Schiebestellern, bei denen sich wenigstens zwei Schlitze in einer gemeinsamen Ebene befinden von einer solchen Länge, daß eine Blende über die gesamte Länge der in der gemeinsamen Ebene befindlichen Schlitze reicht.

In **Fig. 6** ist eine Ansicht auf die elastische Blende 2′ in Richtung des Pfeiles 6 in Fig. 5 dargestellt. Auf der Leiste 4′ befindet sich die Dichtlippe 10′, die aus einem zick-zack-förmig verlaufenden Band 28 gebildet wird, welches eine Höhe H besitzt, die geringer ist als die Ausdehnung der Leiste 4′ in dieser Richtung. Die Aussparung 26 unterbricht die Dichtlippe 10′.

Die **Fig. 7** zeigt eine vergrößerte Darstellung des Schnittes entlang der Linie VII-VII in Fig. 5. Auf der Leiste 4′ befindet sich ein zick-zack-förmiges Band 28, das aus einer Vielzahl von geraden Abschnitten 30 besteht, die jeweils V-förmig zueinander angeordnet sind und jeweils an ihren Enden in bogenförmige Abschnitte 32, bzw. 34 übergehen. Dabei bestimmen zwei aufeinanderfolgende Bogenabschnitte 34 auf der selben Seite den Abstand **A** und jeweils zwei in verschiedene Richtungen weisende benachbarte Bogenabschnitte 32 und 34 die Höhe **H**. Die Dicke **D** des zick-zack-förmigen Bandes 28 beträgt vorzugsweise 0,15 mm. Der Winkel, den die V-förmig angeordneten, geraden Abschnitte 30 einschließen, beträgt ca. 30°.

Die **Fig. 8** zeigt die vergrößerte Darstellung eines Schnittes entlang der Linie VIII-VIII in Fig. 5. Aus dieser Darstellung ist ersichtlich, daß die Leiste 4′ annähernd die Querschnittsform eines Quaders besitzt, dessen vordere Querschnittskante mit 24 und dessen obere Querschnittskante mit 18 bezeichnet sind. An der vorderen Querschnittskante 24 ist die Leiste 4′ mit Vertiefungen 8 versehen, die denjenigen der Fig. 2 entsprechen. Im rechten Winkel zur oberen Querschnittskante 18 ist das zick-zack-förmige Band 28 angeordnet, dessen Breite mit **B** bezeichnet ist. Der Schnitt, den Fig. 8 zeigt, verläuft durch den der vorderen Querschnittskante 24 benachbarten Bogenabschnitt 32. Am oberen Ende des zick-zack-förmigen Bandes 28 sind abgewinkelte Abschnitte 20′ angeformt, die sich orthogonal zur Breite **B** des Bandes 28 erstrecken. Diese abgewinkelten Abschnitte 20′ schließen die durch die Zick-Zack-Form gebildeten Vertiefungen des Bandes 28 seitlich ab.

In **Fig. 9** ist eine weitere Ausführungsvariante des die Dichtlippe bildenden Bandes 36 gezeigt, das auf einer Leiste 40 angeordnet ist und aus einer Vielzahl von aneinander gereihten Bögen 38, 38′ gebildet ist. Dabei sind die Bögen der Wellenform des Bandes 36 auf einer Seite mit 38 und auf der anderen Seite mit 38′ bezeichnet. Zwei aufeinander folgende Bögen 38 einer Seite bestimmen dabei den Abstand **A** und zwei in entgegengesetzte Richtung weisende Bögen 38 und 38′ bestimmen die Höhe **H**.

## Patentansprüche

1. Einteilige elastische Blende (2, 2′) zur Abdichtung eines Schlitzes in einem Schiebesteller, wobei die Blende (2, 2′) im wesentlichen eine Leiste (4, 4′, 40) und eine sich entlang dieser erstreckende, mit einer seiner Längskanten daran angeformte Dichtlippe (10, 10′) umfaßt, und die Leiste (4, 4′, 40) zur Befestigung im Gehäuse des Schiebestellers vorgesehen ist, und die Dichtlippe (10, 10′) den Schlitz abdeckt und unabhängig von der jeweiligen Stellung des Schiebestellers sich dichtend an diesen anlegt, **dadurch gekennzeichnet**, daß die Dichtlippe (10, 10′) aus einem zick-zack-förmigen oder gewellten Band (22, 28, 36) besteht, das über seine gesamte Länge eine konstante Dicke (D) aufweist.

2. Blende nach Anspruch 1, **dadurch gekennzeichnet**, daß die Zick-Zack-Form des Bandes (22, 28) durch im Winkel zueinander angeordnete gerade Abschnitte (12, 30) und dazwischen befindliche Bogenabschnitte (14, 16; 32, 34) gebildet ist.

3. Blende nach Anspruch 1, **dadurch gekennzeichnet**, daß die gewellte Form des Bandes (36) durch abwechselnd ausgerichtete und mit ihren Enden aneinandergereihte Bögen ( 38, 38′) gebildet ist.

4. Blende nach einem der Ansprüche 2 oder 3, **dadurch gekennzeichnet**, daß der Abstand (A) zwischen zwei auf derselben Seite liegenden Bogenabschnitten ( 14, 34) oder Bögen (38) maximal doppelt so groß ist wie die durch zwei aufeinanderfolgende Bogenabschnitte (14, 16 bzw. 32, 34) oder Bögen (38, 38′) bestimmte Höhe (H) des Bandes (22, 28, 36).

5. Blende nach Anspruch 2, **dadurch gekennzeichnet**, daß der Abstand (A) zweier auf der selben Seite liegender Bogenabschnitte (14, 34) das 0,7-fache bis 1,2-fache der durch die entgegengesetzt ausgerichteten Bogenabschnitte (14, 16 bzw. (32, 34) bestimmte Höhe (H) des Bandes (22, 28) beträgt.

6. Blende nach einem der vorhergehenden Ansprüche, **dadurch gekennzeichnet**, daß sich das Band (28) in Richtung seiner Breite (B) orthogonal zu der oberen Querschnittskante (18) der Leiste (4′) erstreckt oder bezogen auf die vordere Querschnittskante (24) in einem stumpfen Winkel auf der Leiste (4′) angeordnet ist.

7. Blende nach einem der vorhergehenden Ansprüche, **dadurch gekennzeichnet**, daß der Seitenrand des Bandes (22, 28), welcher der Leiste (4, 4′) entfernt liegt, in abgewinkelte Abschnitte (20, 20′) übergeht, die zumindest die Hälfte der durch die Zick-zack- oder Wellenform gebildeten Vertiefungen seitlich schließen.

8. Blende nach Anspruch 7, **dadurch gekennzeichnet**, daß die abgewinkelten Abschnitte (20, 20′) eine durchgehende und sich parallel zur Leiste (4, 4′) erstreckende ebene Fläche bilden.

9. Blende nach einem der vorhergehenden Ansprüche, **dadurch gekennzeichnet**, daß die Dicke (D) des Bandes (22, 28, 36) 0,1 mm bis 0,2 mm beträgt.

10. Blende nach einem der vorhergehenden Ansprüche, **dadurch gekennzeichnet**, daß das Verhältnis der Breite (B) des Bandes (22, 28) zu dessen Dicke (D) zwischen 50 : 1 und 25 : 1 liegt und vorzugsweise ca. 33 : 1 beträgt.

11. Blende nach einem der vorhergehenden Ansprüche, **dadurch gekennzeichnet**, daß in der Leiste (4, 4′) Öffnungen (6) oder Vertiefungen (8) zur Aufnahme von Befestigungsmitteln oder dergleichen vorgesehen sind.

## Claims

1. One-piece resilient screen (2, 2′) for sealing a slot in a sliding actuator, the screen (2, 2′) basically comprising a strip (4, 4′, 40) and a sealing lip (10, 10′) which extends along that strip with one of its longitudinal edges formed integral therewith, and the strip (4, 4′, 40) being provided for securing in the housing of the sliding actuator, and the sealing lip (10, 10′) covering the slot and abutting the sliding actuator in sealing manner regardless of the latter's position, characterised in that the sealing lip (10, 10′) comprises a zig-zag-shaped or corrugated band (22, 28, 36) which has a constant thickness (D) over its entire length.

2. Screen according to claim 1, characterised in that the zig-zag shape of the band (22, 28) is formed by straight portions (12, 30) arranged at an angle with respect to one another and curved portions (14, 16; 32, 34) arranged between the straight portions.

3. Screen according to claim 1, characterised in that the corrugated shape of the band (36) is formed by curves (38, 38′) of alternating orientation, the ends of which are arranged next to one another in a row.

4. Screen according to either claim 2 or claim 3, characterised in that the distance (A) between two curved portions (14, 34) or curves (38) lying on the same side is a maximum of twice as great as the height (H) of the band (22, 28, 36) determined by two successive curved portions (14, 16 and 32, 34,respectively) or curves (38, 38′).

5. Screen according to Claim 2, characterised in that the distance (A) between two curved portions (14, 34) lying on the same side is from 0.7 to 1.2 times the height (H) of the band (22, 28) determined by the oppositely oriented curved portions (14, 16 and 32, 34, respectively).

6. Screen according to any one of the preceding claims, characterised in that the band (28) extends, in the direction of its width (B), at right-angles to the upper cross-sectional edge (18) of the strip (4′) or is arranged on the strip (4′) at an obtuse angle relative to the front cross-sectional edge (24).

7. Screen according to any one of the preceding claims, characterised in that the side border of the band (22, 28) remote from the strip (4, 4′) makes a transition into angled portions (20, 20′) which close laterally at least half of the depressions formed by the zig-zag or corrugated shape.

8. Screen according to Claim 7, characterised in that the angled portions (20, 20′) form a continuous flat face which extends parallel to the strip (4, 4′).

9. Screen according to any one of the preceding claims, characterised in that the thickness (D) of the band (22, 28, 36) is from 0.1 mm to 0.2 mm.

10. Screen according to any one of the preceding claims, characterised in that the ratio of the width (B) of the band (22, 28) to its thickness (D) is between 50:1 and 25:1 and is preferably approximately 33:1.

11. Screen according to any one of the preceding claims, characterised in that openings (6) or depressions (8) for accommodating securing means or the like are provided in the strip (4, 4′).

## Revendications

1. Diaphragme élastique (2, 2′) d'une seule pièce pour assurer l'étanchéité d'une fente dans une commande coulissante, ce diaphragme (2, 2′) comportant dans l'essentiel une tige (4, 4′, 40) et une lèvre d'étanchéité (10, 10′) s'étendant le long de celle-ci ou étant liée avec elle par un de ses bords longitudinaux, la tige (4, 4′, 40) étant prévue pour une fixation dans le carter de la commande coulissante et la lèvre d'étanchéité (10, 10′) recouvrant la fente et s'appliquant de façon étanche contre celle-ci indépendamment de la position correspondante de la commande coulissante, caractérisé en ce que la lèvre d'étanchéité (10, 10′) se compose d'un ruban (22, 28, 36) en forme de zig-zag ou ondulé qui a sur toute sa longueur une épaisseur constante (D).

2. Diaphragme selon la revendication 1, caractérisé en ce que la forme en zig-zag du ruban (28) est créée par des parties droites (12, 30) faisant un angle entre elles et par des parties incurvées intermédiaires (14, 36 ; 32, 34).

3. Diaphragme selon la revendication 1, caractérisé en ce que la forme ondulée du ruban (36) est créée par des parties en arc (38, 38′) d'orientations alternées et dont les extrémités sont alignées.

4. Diaphragme selon une des revendications 2 et 3, caractérisé en ce que l'espacement (A) entre deux parties incurvées (14, 34) ou parties en arc (38) situées du même côté, a au maximum une grandeur double de la hauteur (H) du ruban (22, 28, 36) définie par deux parties incurvées (14, 16 ou 32, 34), ou deux parties encore (38, 38′), successives.

5. Diaphragme selon la revendication 2, caractérisé en ce que l'espacement (A) entre deux parties incurvées (14, 34) situées du même côté est compris entre 0,7 fois et 1,2 fois la hauteur (H) du ruban (22, 28, 36) définie par les parties en arc (14, 16 ou 32, 34) orientées dans des sens opposés.

6. Diaphragme selon une des revendications précédentes, caractérisé en ce que le ruban (28) s'étend, dans le sens de sa largeur (8), perpendiculairement au bord supérieur (18) de la section de la tige (4) ou bien est disposé sur la tige (4′) en faisant un angle aigu avec le bord avant supérieur (24) de la section.

7. Diaphragme selon une des revendications précédentes, caractérisé en ce que le bord latéral du ruban (22, 28), qui est éloigné de la tige (4, 4′), se prolonge par des parties recourbées (20, 20′), qui ferment latéralement au moins la moitié des creux créés par la forme en zig-zag ou la forme ondulée.

8. Diaphragme selon la revendication 7, caractérisé en ce que les parties recourbées (20, 20′) créent une surface plane continue et s'étendant parallèlement à la tige (4, 4′).

9. Diaphragme selon une des revendications précédentes, caractérisé en ce que l'épaisseur (D) du ruban (22, 28, 36) est comprise entre 0,1 mm et 0,2 mm.

10. Diaphragme selon une des revendications précédentes, caractérisé en ce que le rapport entre la largeur (B) du ruban (22, 28) et son épaisseur (D) est compris entre 50:1 et 25:1 et s'élève avantageusement à environ 33:1.

11. Diaphragme selon une des revendications précédentes, caractérisé en ce qu' il est prévu dans la tige (4, 4′) des ouvertures (6) ou des creux (8) pour recevoir des moyens de fixation ou analogues.
